# EUROPEAN PATENT APPLICATION

(11) **EP 3 683 707 A1**
(43) Date of publication of application: **22.07.2020**
(21) Application number: 18856487.6
(22) Date of filing: 18.07.2018
(51) Int. Cl.: G06F 21/62, G06F 12/00

(54) **INFORMATION PROCESSING DEVICE, INFORMATION PROCESSING METHOD, AND PROGRAM**

(30) Priority: 14.09.2017 JP 2017176731
(71) Applicant: Sony Corporation, Tokyo 108-0075 (JP)
(72) Inventor: TAKAHASHI, Koki, Tokyo 141-0031 (JP); WATANABE, Kazuhiro, Tokyo 141-0031 (JP); ISOZU, Masaaki, Tokyo 141-0031 (JP)
(74) Representative: MFG Patentanwälte Meyer-Wildhagen Meggle-Freund Gerhard PartG mbB
(86) International application number: PCT/JP2018/026933
(87) International publication number: WO 2019/054044

(57) **Abstract**

To implement access control of data registered in a P2P database.

Provided is an information processing device including an acquisition unit configured to acquire arbitrary data associated with access right information desired by a user, and a registration control unit configured to control registration of the arbitrary data to a P2P database.

## Description

### TECHNICAL FIELD

The present disclosure relates to an information processing device, an information processing method, and a program.

### BACKGROUND ART

In recent years, services using a peer-to-peer database for blockchain data or the like disclosed in Non-Patent Document 1 below have been actively developed. Examples of the services include Bitcoin in Non-Patent Document 2 below and the like, which uses blockchain data for exchanging virtual currency.

A service using a peer-to-peer database for blockchain data or the like can prevent falsification and the like of data registered in the peer-to-peer database and ensure authenticity of the data.

### CITATION LIST

### NON-PATENT DOCUMENT

Non-Patent Document 1: Melanie Swan, "Blockchain", (US), O'Reilly Media, 2015-01-22
Non-Patent Document 2: Andreas M. Antonopoulos, "Mastering Bitcoin", (US), O'Reilly Media, 2014-12-01

### SUMMARY OF THE INVENTION

### PROBLEMS TO BE SOLVED BY THE INVENTION

Here, an information processing device including a peer-to-peer database can acquire and browse data registered in the peer-to-peer database. In other words, in a case where data is registered in the peer-to-peer database, the data can be browsed by the information processing device including the peer-to-peer database, and a user who has registered the data has not been able to appropriately control an access to the data.

Therefore, the present disclosure has been made in view of the above problem, and an object of the present disclosure is to provide new and improved information processing device, information processing method, and program capable of implementing access control to data registered in a peer-to-peer database.

### SOLUTIONS TO PROBLEMS

According to the present disclosure, an information processing device including an acquisition unit configured to acquire arbitrary data associated with access right information desired by a user, and a registration control unit configured to control registration of the arbitrary data to a P2P database is provided.

Furthermore, according to the present disclosure, an information processing method executed by a computer, the method including acquiring arbitrary data associated with access right information desired by a user, and controlling registration of the arbitrary data to a P2P database.

Furthermore, according to the present disclosure, a program for causing a computer to implement acquiring arbitrary data associated with access right information desired by a user, and controlling registration of the arbitrary data to a P2P database.

### EFFECTS OF THE INVENTION

As described above, according to the present disclosure, access control to data registered in a peer-to-peer database can be implemented.

Note that the above-described effect is not necessarily limited, and any of effects described in the present specification or another effect that can be grasped from the present specification may be exerted in addition to or in place of the above-described effect.

### BRIEF DESCRIPTION OF THE DRAWINGS

Fig. 1 is a diagram for describing an overview of blockchain data that is a kind of peer-to-peer database.
Fig. 2 is a diagram for describing an overview of blockchain data that is a kind of peer-to-peer database.
Fig. 3 is a diagram for describing an overview of blockchain data that is a kind of peer-to-peer database.
Fig. 4 is a diagram for describing a configuration example of an information processing system according to the present embodiment.
Fig. 5 is a block diagram illustrating a functional configuration example of a user device 100 according to the present embodiment.
Fig. 6A is a diagram for describing a specific example of data and access right information associated with the data.
Fig. 6B is a diagram for describing a specific example of data and access right information associated with the data.
Fig. 6C is a diagram for describing a specific example of data and access right information associated with the data.
Fig. 7 is a block diagram illustrating a functional configuration example of a node device 200 according to the present embodiment.
Fig. 8 is a diagram for describing a specific example of a template.
Fig. 9 is a flowchart illustrating an example of a flow of processing of registering data and access right information in a P2P database.
Fig. 10 is a flowchart illustrating an example of a flow of processing regarding access control to data.
Fig. 11 is a block diagram illustrating a hardware configuration example of an information processing device 900 that implements a user device 100 or a node device 200 according to the present embodiment.

### MODE FOR CARRYING OUT THE INVENTION

Favorable embodiments of the present disclosure will be described in detail below with reference to the accompanying drawings. Note that, in the present specification and the drawings, redundant description of constituent elements having substantially the same functional configurations is omitted by giving the same reference numerals.

Note that the description will be given in the following order.
1. Overview of peer-to-peer database
2. Embodiments
2.1. Overview
2.2. System configuration example
2.3. Functional configuration example of user device 100
2.4. Functional configuration example of node device 200
2.5. Flow of processing
2.6. Access right information collective setting function
3. Hardware configuration example
4. Conclusion

### <1. Overview of peer-to-peer database>

First, an overview of a peer-to-peer database will be described before describing embodiments of the present disclosure.

In an information processing system according to the present embodiment, a distributed peer-to-peer database distributed in a peer-to-peer network is used. Note that the peer-to-peer network may also be called a peer-to-peer distributed file system. Hereinafter, the peer-to-peer network may be referred to as a "P2P network" and the peer-to-peer database may be referred to as a "P2P database". As an example of the P2P database, blockchain data distributed in the P2P network may be used. Therefore, first, an overview of a blockchain system will be described as an example.

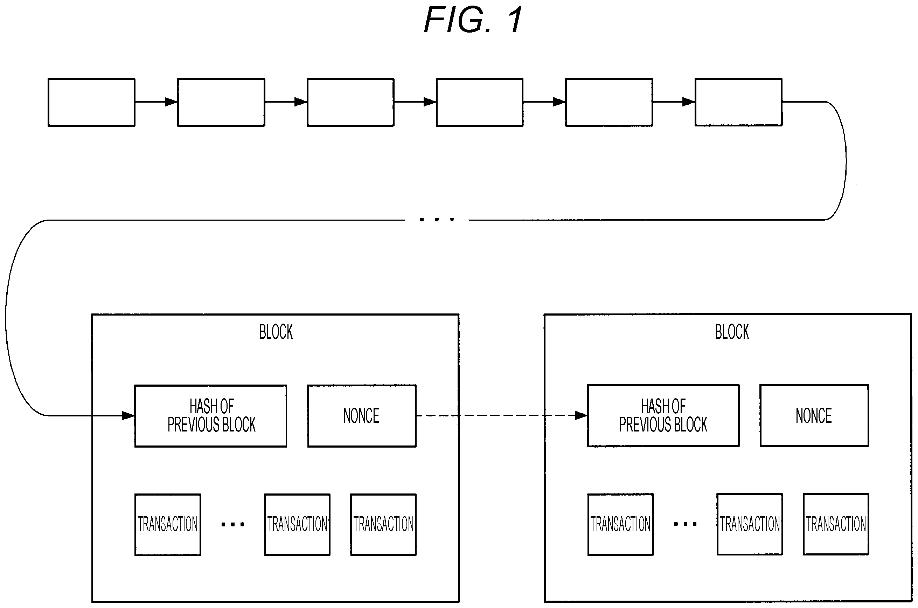

As illustrated in Fig. 1, the blockchain data is data including a plurality of blocks connected as if the blocks formed a chain. In each block, one or two or more target data can be stored as a transaction.

An example of the blockchain data includes blockchain data used for exchanging virtual currency data such as Bitcoin. The blockchain data used for exchanging virtual currency data includes, for example, values called hash of a previous block and nonce. The hash of the previous block is information used to determine whether or not a block is a "correct block" that is correctly connected from the previous block. The nonce is information used to prevent spoofing in authentication using a hash, and falsification is prevented using the nonce. An example of the nonce includes a character string, a numeric string, or data indicating a combination thereof, for example.

Furthermore, in the blockchain data, data of each transaction is given an electronic signature using an encryption key. Furthermore, the data of each transaction is made public and shared throughout the P2P network.

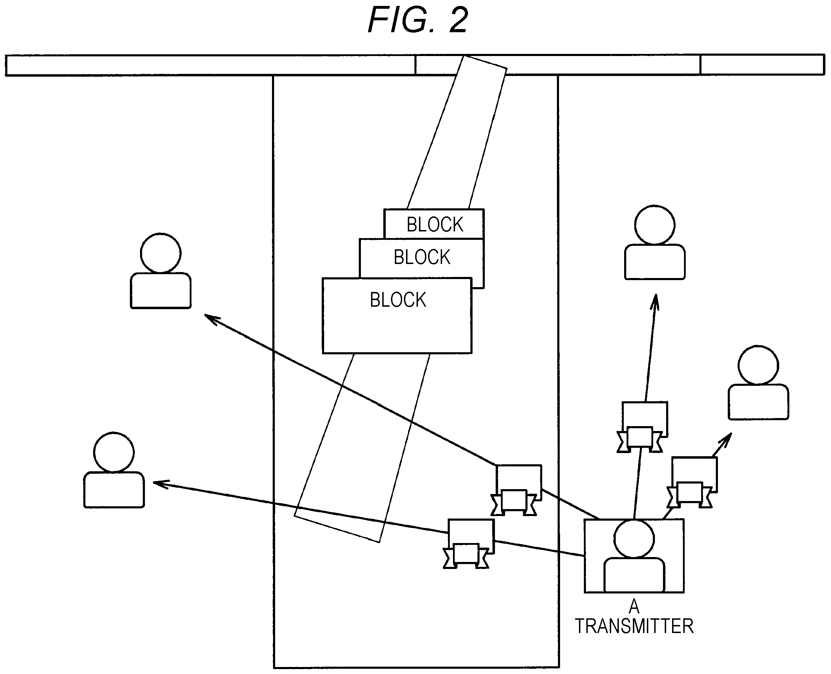

Fig. 2 is a diagram illustrating a state in which target data is registered by a user A in the blockchain system. The user A digitally signs the target data to be registered in the blockchain data using a private key of the user A. Then, the user A broadcasts the transaction including the digitally signed target data on the P2P network. This ensures that the holder of the target data is the user A.

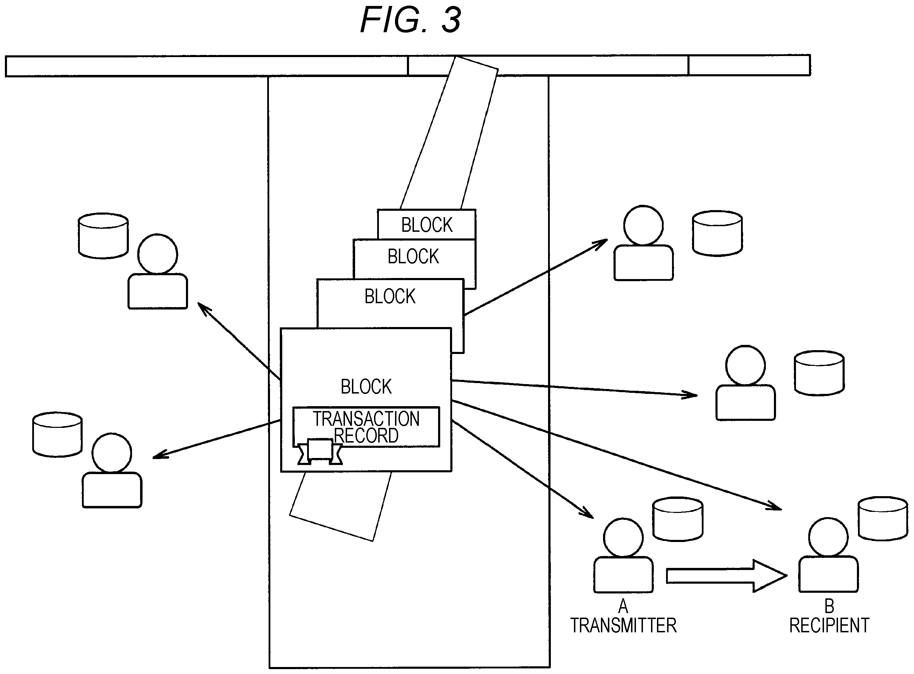

Fig. 3 is a diagram illustrating a state in which target data is transferred from the user A to a user B in the blockchain system. The user A digitally signs the transaction using the private key of the user A and further includes a public key of the user B to the transaction. This indicates that the target data has been transferred from the user A to the user B. Furthermore, the user B may acquire a public key of the user A from the user A when transacting the target data and acquire the digitally signed target data.

Furthermore, in the blockchain system, another target data different from existing virtual currency can be included to a blockchain data used for exchanging the virtual currency such as Bitcoin blockchain data, using a sidechain technology, for example.

### <2. Embodiments>

The overview of the peer-to-peer database has been described above. Next, embodiments according to the present disclosure will be described.

### (2.1. Overview)

First, an overview of the present disclosure will be described.

As described above, an information processing system that manages data using a P2P database such as blockchain data can prevent falsification or the like of data and ensure the authenticity of the data.

However, as described above, since the information processing device including a P2P database can acquire and browse data registered in the P2P database, in a case where data is registered in the P2P database, the data can be browsed by the information processing device having the P2P database, and the user who has registered the data has not been able to appropriately control an access to the data.

In view of the above circumstances, the person of the present disclosure has reached creation of the present disclosure. An information processing system according to the present disclosure can register arbitrary data associated with access right information desired by the user to a P2P database. Then, the information processing system according to the present disclosure has a template provided in a predetermined program (for example, a chain code or the like) provided in the P2P database and executed on the P2P database, and implements access control by interpreting the access right information associated with the data using the template. Here, the template is a program that defines content or the like permitted or prohibited by the access right information. As described above, not an administrator of the P2P database but the user himself/herself who has created the data can implement the access control to the data registered in the P2P database.

Furthermore, the information processing system according to the present disclosure can set the access right information for a user (hereinafter may be referred to as "anonymous person") who is not authenticated on the system. As a result, even in a case where the anonymous person requests acquisition of data registered in the P2P database, the information processing system according to the present disclosure can appropriately respond on the basis of the access right information associated with the data. Here, the anonymous person includes, for example, a user who has not performed predetermined user authentication processing (for example, user authentication with an ID and a PW, fingerprint authentication, iris authentication, or the like) or has failed in the predetermined user authentication, a user who uses the present service for the first time, a user who has not been registered, a business operator other than a business operator that provides the present service, or the like.

Furthermore, the information processing system according to the present disclosure can prevent falsification of the access right information and the like and ensure the authenticity of the access right information by registering the access right information associated with data to the P2P database.

Furthermore, according to the information processing system according to the present disclosure can set (for example, newly create, change, delete, or the like) the template used when interpreting the access right information. Thereby, for example, the business operator who provides a service to a user or the like can determine how to handle the access right information by setting the template.

Note that the present disclosure may be applied to any system, apparatus, service, or the like as long as the system, apparatus, or service uses a P2P database. Hereinafter, a case where the present disclosure is applied to an information processing system that provides a learning achievement/activity recording service will be described. Here, the learning achievement/activity recording service is a service in which each educational institution (e.g., nursery school, kindergarten, elementary school, junior high school, high school, university, graduate school, tutoring school, prep school, qualified school, or the like) registers and manages students' learning achievement records (e.g., records related to exam results, credits, or qualifications) and student activity records (e.g., records related to club activities, student council activities, attendance, or the like) in the P2P database, for example. This ensures the authenticity of the students' learning achievement records and activity records. The service can be used, for example, in a case where a user submits information regarding test results, acquisition units, and the like to a school to sit for an entrance exam, a company scheduled to work for, or the like. Note that the content of the learning achievement/activity recording service is not limited to the above case. For example, the learning achievement/activity recording service may be used by an institution other than an educational institution, and records relating to social experiences, work history, or the like of a target person may be registered and managed in the P2P database.

### (2.2. System configuration example)

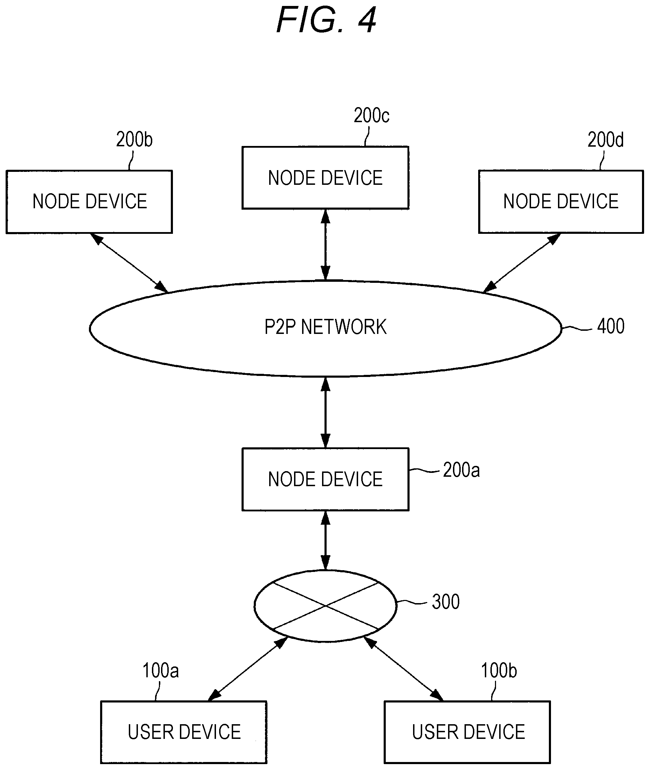

The overview of the present disclosure has been described above. Next, a configuration example of the information processing system according to the present embodiment will be described with reference to Fig. 4.

As illustrated in Fig. 4, the information processing system according to the present embodiment includes a plurality of user devices 100 (a user device 100a and a user device 100b in Fig. 4) and a plurality of node devices 200 (a node device 200a to a node device 200d in Fig. 4). Furthermore, the plurality of user devices 100 is connected to the node device 200 (the node device 200a in Fig. 4) via a network 300. Furthermore, each of the plurality of node devices 200 is connected to a P2P network 400. Note that the configuration of the information processing system according to the present embodiment is not limited to the configuration in Fig. 4. For example, the number of devices constituting the information processing system may be changed as appropriate. Furthermore, the user device 100a and the user device 100b may be connected to different node devices 200 from each other.

### (User device 100)

The user device 100 is an information processing device used by a user, a business operator, or the like who requests registration of data to a P2P database or acquisition of data from a P2P database. For example, the user device 100 may be a device of a student or the like who uses the learning achievement/activity recording service or a device of a business operator or the like who provides the learning achievement/activity recording service. In other words, the "user" in the present embodiment can include a student or the like who uses the present service or a business operator or the like who provides the present service.

Describing registration processing for data to the P2P database, the user device 100 creates arbitrary data to be registered to the P2P database, and associates the data with access right information desired by the user. Then, the user device 100 creates request information requesting registration of the data and the access right information associated with each other to the P2P database, and provides the node device 200 with the information. As a result, the data and the access right information associated with each other are registered in the P2P database. Note that details of the access right information will be described below.

Describing the acquisition processing for data from the P2P database, the user device 100 creates request information (for example, a query or the like) specifying data registered in the P2P database and provides the node device 200 with the information, thereby acquiring desired data registered in the P2P database. At that time, the user device 100 also provides the node device 200 with identification information that can identify the authenticated user. Thereby, the access control to the data registered in the P2P database by the node device 200 is implemented. Note that the user who operates the user device 100 can acquire not only the data created by the user himself/herself (or by the user's own device) but also data created by another person (or another user device 100) depending on content of the access right information. For example, data created by a certain user using the user device 100a can be acquired from the P2P database by another user having an access right using the user device 100b.

Furthermore, the type of the user device 100 is not particularly limited. For example, the user device 100 may be any information processing device such as a general-purpose computer, a personal computer (PC), a tablet PC, a smartphone, a portable game device, a media player, a digital camera, a digital video camera, or the like.

### (Node device 200)

The node device 200 is an information processing device connected to the P2P network 400 and including the P2P database. Then, the node device 200 can perform the registration processing for data to the P2P database, acquisition processing for data from the P2P database, and the like.

Describing the registration processing for data to the P2P database, in a case where the request information requesting registration of arbitrary data to the P2P database in a state where the arbitrary data is associated with the access right information is provided from the user device 100, the node device 200 registers the data and the access right information to the P2P database. At this time, the node device 200 does not register all the data requested to be registered, and appropriately confirms the content of the data and the access right information and may reject registration of data or access right information having content prohibited in advance. For example, the node device 200 may reject registration of data in which an access right that does not allow anyone to read is set.

Describing the acquisition processing for data from the P2P database, in a case where the request information (for example, a query or the like) specifying data registered in the P2P database is provided from the user device 100, the node device 200 performs access control to the data on the basis of the identification information of the user provided together with the request information. More specifically, the node device 200 confirms the access right information associated with the requested data, and confirms the access right granted to the user who is requesting the data. Then, as described above, the node device 200 interprets the access right information using the template, thereby performing access control according to an interpretation result. Details of the template and access control will be described below.

Note that the node device 200 basically uses a predetermined program (for example, a chain code or the like) provided in the P2P database and executed on the P2P database, in a case of registering data to the P2P database and in a case of acquiring data from the P2P database. By using the program, various types of processing other than transactions of the virtual currency such as Bitcoin or the like are implemented according to a predetermined rule, for example. Furthermore, the template is provided in the program. The node device 200 executes the program, thereby implementing the access control to the data registered in the P2P database. Hereinafter, the predetermined program provided in the P2P database and executed on the P2P database is referred to as a "P2P database program". Note that the node device 200 may implement these types of processing using a program other than the P2P database program as appropriate.

Furthermore, in the present embodiment, an example in which the plurality of node devices 200 has the same function will be described. However, the node devices 200 may have different functions from one another. For example, a node device 200 that approves registration of data (transaction) to the P2P database (for example, endorsing peer or the like), a node device 200 that instructs each node device 200 on registration after approval (for example, ordering peer or the like), and a node device 200 that registers data to the P2P database (for example, committing peer or the like) may be provided. Note that the type of the node device 200 is not particularly limited similarly to the user device 100.

### (P2P network 400)

The P2P network 400 is a network in which a P2P database is distributed. As described above, each node device 200 can update the P2P database while maintaining consistency with the P2P database held by another node device 200 by being connected to the P2P network 400.

Note that the type of the P2P network 400 is not particularly limited. For example, the P2P network 400 may be any of a consortium type operated by a plurality of organizations, a private type operated by a single organization, or a public type that does not specifically limit participants.

Note that the communication method, the line type, and the like used for the P2P network 400 are not particularly limited. For example, the P2P network 400 may be implemented as a leased line network such as an internet protocol-virtual private network (IP-VPN). Furthermore, the P2P network 400 may be implemented as a public network such as the Internet, a telephone network, or a satellite network, various local area networks (LANs) including Ethernet (registered trademark), a wide area network (WAN), or the like. Moreover, the P2P network 400 may be implemented as a wireless communication network such as Wi-Fi (registered trademark) or Bluetooth (registered trademark).

### (Network 300)

The network 300 is a network that connects the user device 100 and the node device 200. Note that the communication method, line type, and the like used for the network 300 are not particularly limited, similarly to the P2P network 400.

The configuration example of the information processing system according to the present embodiment has been described. Note that the configuration described above with reference to Fig. 4 is merely an example, and the configuration of the information processing system according to the present embodiment is not limited to the example. For example, the function of the user device 100 may be provided in the node device 200. In other words, part or all of the functions of the user device 100 are provided in the node device 200, and the node device 200 may perform data creation, data-access right information association, data acquisition request, and the like. Furthermore, the function of the node device 200 may be provided in the user device 100. In other words, the user device 100 may participate in the P2P network 400 and include a P2P database. The configuration of the information processing system according to the present embodiment can be flexibly modified according to specifications and operations.

### (2.3. Functional configuration example of user device 100)

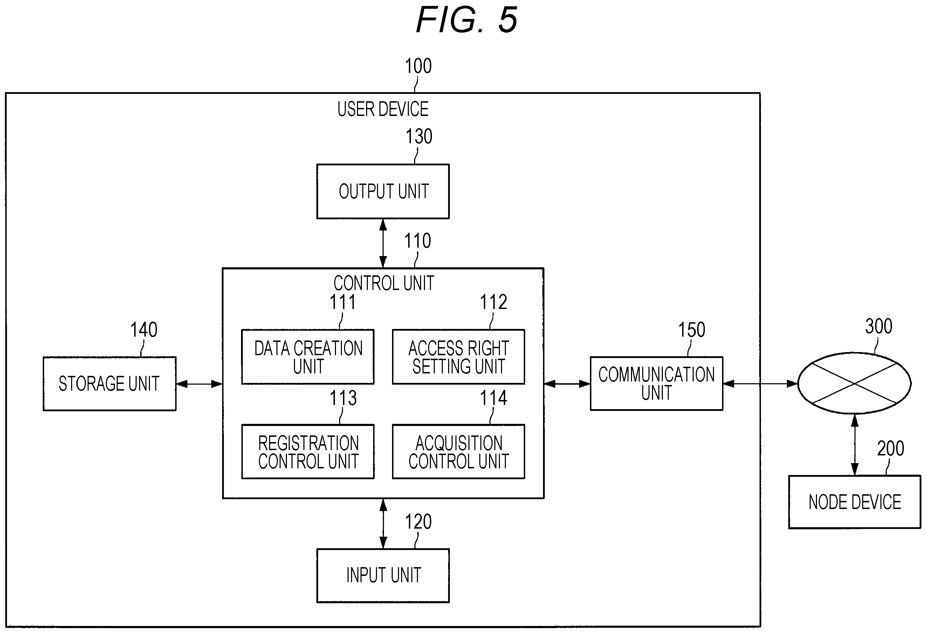

The configuration example of the information processing system according to the present embodiment has been described above. Next, a functional configuration example of the user device 100 will be described with reference to Fig. 5.

As illustrated in Fig. 5, the user device 100 includes a control unit 110, an input unit 120, an output unit 130, a storage unit 140, and a communication unit 150. Furthermore, the control unit 110 includes a data creation unit 111, an access right setting unit 112, a registration control unit 113, and an acquisition control unit 114.

### (Control unit 110)

The control unit 110 has a functional configuration that comprehensively controls overall processing performed by the user device 100. For example, the control unit 110 can control the start and stop of the configurations and control the output unit 130 such as a display or a speaker on the basis of an input performed by the user using the input unit 120, control information from an external device received via the communication unit 150, or the like. Note that the control content of the control unit 110 is not limited thereto. For example, the control unit 110 may control processing generally performed in a general-purpose computer, a PC, a tablet PC, or the like.

### (Data creation unit 111)

The data creation unit 111 has a functional configuration that creates data to be registered to the P2P database. For example, the data creation unit 111 creates data regarding students' learning achievement records (e.g., records related to exam results, credits, qualifications, or the like) and student activity records (e.g., records related to club activities, student council activities, attendance, or the like) on the basis of a request from a business operator or the like (for example, an educational institution or the like) that provides learning achievement/activity recording service, or a student, a guardian, or the like who uses the service. Note that the data created by the data creation unit 111 is not limited thereto.

Furthermore, the "data" created by the data creation unit 111 may refer to, for example, a file including a plurality of data, may refer to each data included in the file, or may refer to a folder (or directory) or the like including a plurality of files. In other words, the information processing system according to the present embodiment may perform access control in any unit of a file, data included in the file, or a folder (or directory) including a plurality of files. The data creation unit 111 provides the created data to the access right setting unit 112 described below.

### (Access right setting unit 112)

The access right setting unit 112 has a functional configuration that creates access right information and associates the access right information with the data created by the data creation unit 111. More specifically, first, the user considers the importance, purpose, application, or the like of the data created using the data creation unit 111, and then determines the users who are setting targets to which the access right is set and an access right granted to each setting target. Thereafter, the access right setting unit 112 creates the access right information on the basis of the request from the user, and associates the access right information with the data created by the data creation unit 111.

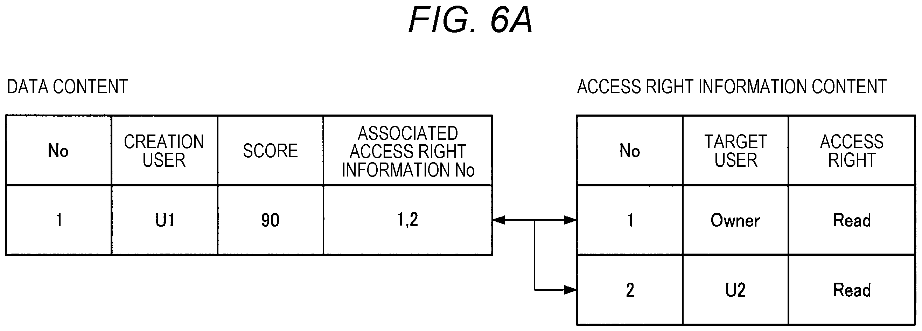

Here, specific examples of the data and the access right information associated with the data will be described with reference to Figs. 6A to 6C.

For example, Fig. 6A illustrates one piece of data indicating a test score (creation user: U1, score: 90) and two pieces of access right information associated with the data. In the example in Fig. 6A, the access right "Read" is set for the target users "Owner (the owner of the data (assuming the creator of the data but not limited to the creator))" and "U2". Furthermore, the data and the access right information are associated with each other by "associated access right information No" included in the data.

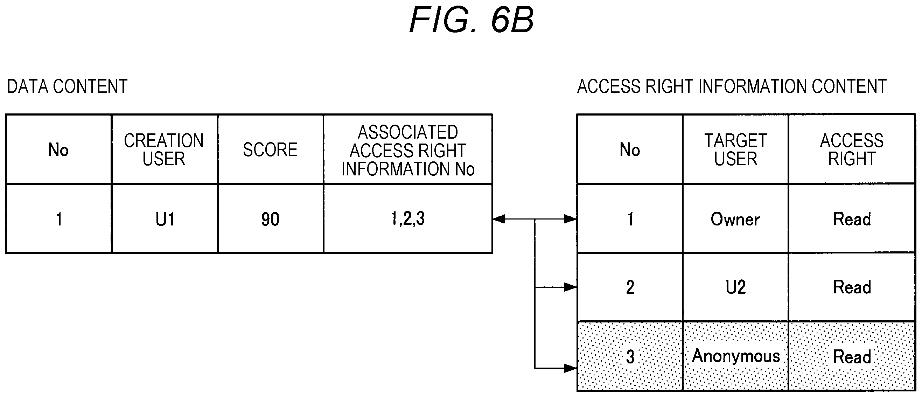

Furthermore, as described above, in the present embodiment, an access right can be set for an "anonymous person" who is a user not authenticated on the system. For example, as illustrated in Fig. 6B, the access right "Read" may be set for the target user "Anonymous (anonymous person)".

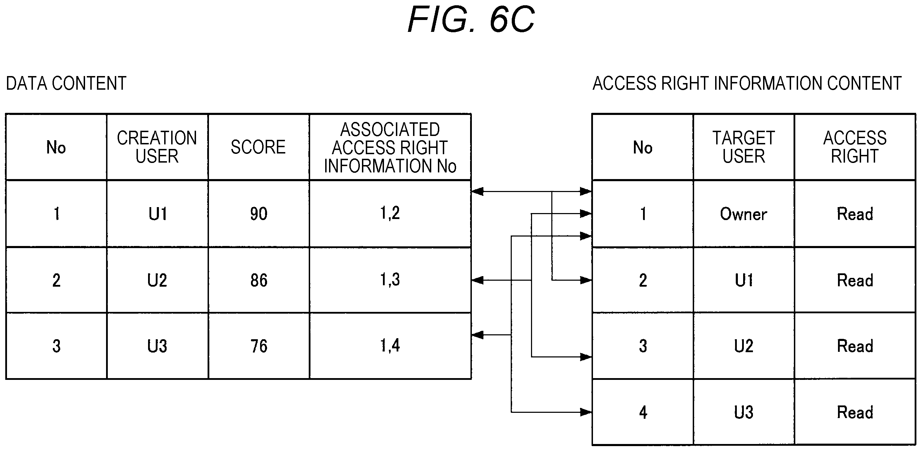

Furthermore, as illustrated in Fig. 6C, the access right setting unit 112 may set one or more pieces of access right information for each of a plurality of data. In the example in Fig. 6C, No. 1 data (creation user: U1, score: 90) is associated with No. 1 and No. 2 access right information, No. 2 data (creation user: U2, score: 86) is associated with No. 1 and No. 3 access right information, and No. 3 data (creation user: U3, score: 76) is associated with No. 1 and No. 4 access right information.

Note that, in the examples in Figs. 6A to 6C, only "Read" is set as the access right, but the set access right is not limited to "Read". For example, an access right to permit approval processing for the data registered in the P2P database, an access right to permit registration of arbitrary information regarding the data registered in the P2P database (for example, information uniquely specifying cached data, or the like in a case where the data is cached) to the P2P database, or the like may be set. Furthermore, for example, in a P2P database that allows data overwriting, additional writing, or the like, an access right to permit data overwriting, an access right to permit additional data writing, or the like may be set. Furthermore, an access right newly defined using a template by the business operator who provides the service, or the like may be set. Details of the function to define a new access right will be described below.

Furthermore, the access right setting unit 112 may associate incomplete access right information (or access right information containing an error) with data. More specifically, the access right setting unit 112 may associate access right information for which either "target user" or "access right" is not set (or access right information that contains an error in either "target user" or "access right") with data in the examples in Figs. 6A to 6C. In this case, predefined default settings can be reflected. Details of the default settings will be described below.

Furthermore, in the examples in Figs. 6A to 6C, the "target user" is set in the access right information, but the embodiment is not limited to the examples. For example, "target group (also referred to as "target community")" may be set in the access right information, instead of the "target user". Here, the "target group" refers to a group of one or more users, and includes, for example, a school group, a grade group, a class group, a club activity group, or the like. This eliminates the need for the access right setting unit 112 to create access right information for each person, so can more efficiently set the access right information. Note that one user may belong to two or more groups.

Furthermore, in the examples in Figs. 6A to 6C, the association between the data and the access right information has been implemented using "associated access right information No" included in the data. However, the method of associating the data and the access right information is not limited to the examples. For example, the access right setting unit 112 may associate the data with the access right information by storing the access right information in the data. The access right setting unit 112 provides the registration control unit 113 to be described below with the data and the access right information associated with each other.

### (Registration control unit 113)

The registration control unit 113 has a functional configuration that controls registration of data and access right information to the P2P database. More specifically, the registration control unit 113 creates the request information requesting registration of the data and the access right information associated with each other by the access right setting unit 112 to the P2P database, and provides the node device 200 with the information. As a result, these pieces of information are registered in the P2P database by the node device 200.

### (Acquisition control unit 114)

The acquisition control unit 114 has a functional configuration that controls the acquisition processing for data managed in the P2P database. More specifically, the acquisition control unit 114 creates, in response to the request from the user, the request information (for example, a query or the like) specifying data registered in the P2P database and provides the node device 200 with the information, thereby acquiring desired data registered in the P2P database. At that time, the acquisition control unit 114 also provides the node device 200 with the identification information that can identify the authenticated user.

Here, the identification information may be any information as long as the user can be uniquely identified. For example, the identification information may be a user ID in the present service, a credit card number, a bank account number, a license number, a student ID number, an employee ID number, an e-mail address, a fingerprint data hash value, an iris data hash value, or the like. Furthermore, the identification information may be information that can uniquely identify the user device 100 operated by the user, not the user itself. For example, the identification information may be address information (for example, a MAC address, an IP address, or the like) of the user device 100, information regarding a combination of a manufacturer and a manufacturing number, or the like. By providing the node device 200 with such identification information, access control for the data to be acquired is implemented.

### (Input unit 120)

The input unit 120 has a functional configuration that receives an input from the user. For example, the input unit 120 includes an input means such as a mouse, a keyboard, a touch panel, a button, a switch, or a microphone, and the user can input regarding data creation, access right information creation, data registration request, data acquisition request, or the like, using the input means. The input unit 120 provides the control unit 110 with the input data. Note that the input means provided in the input unit 120 is not particularly limited.

### (Output unit 130)

The output unit 130 has a functional configuration that outputs various data. For example, the output unit 130 includes a display means such as a display, a sound output means such as a speaker, or the like, and displays, on the display or the like, or outputs, as sound from the speaker or the like, information regarding the data created by the data creation unit 111, the access right information created by the access right setting unit 112, the data acquired by the acquisition control unit 114, or the like on the basis of the control of the control unit 110. Note that output means provided in the output unit 130 is not particularly limited.

### (Storage unit 140)

The storage unit 140 has a functional configuration that stores various types of information. For example, the storage unit 140 stores the data created by the data creation unit 111, the access right information created by the access right setting unit 112, the data acquired by the acquisition control unit 114, or the like, and stores a program, a parameter, or the like used by each functional configuration of the user device 100. Note that information stored in the storage unit 140 is not limited thereto.

### (Communication unit 150)

The communication unit 150 has a functional configuration that controls various communications with the node device 200. For example, the communication unit 150 transmits the request information requesting registration of data and access right information associated with each other to the P2P database, the request information requesting acquisition of data from the P2P database, and the like to the node device 200, and receives the data acquired from the P2P database or the like from the node device 200. Note that the communication content of the communication unit 150 is not limited thereto.

The functional configuration example of the user device 100 has been described above. Note that the functional configuration described above with reference to Fig. 5 is merely an example, and the functional configuration of the user device 100 is not limited to such an example. For example, the user device 100 does not necessarily have all of the configurations illustrated in Fig. 5. Furthermore, the functional configuration of the user device 100 can be flexibly modified according to specifications and operations.

### (2.4. Functional configuration example of node device 200)

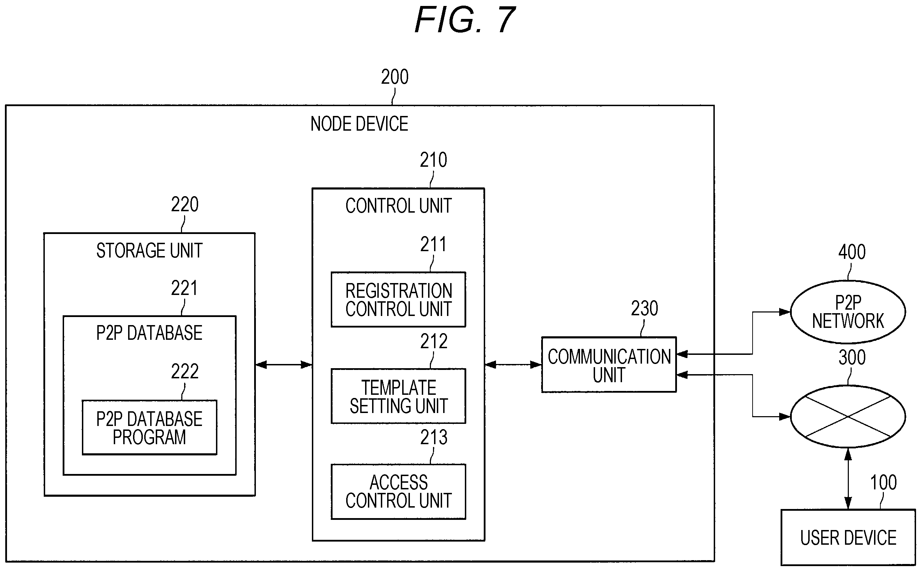

The functional configuration example of the user device 100 has been described above. Next, a functional configuration example of the node device 200 will be described with reference to Fig. 7.

As illustrated in Fig. 7, the node device 200 includes a control unit 210, a storage unit 220, and a communication unit 230. Furthermore, the control unit 210 includes a registration control unit 211, a template setting unit 212, and an access control unit 213. Furthermore, the storage unit 220 includes a P2P database 221, and a P2P database program 222 is provided in the P2P database 221.

### (Control unit 210)

The control unit 210 has a functional configuration that comprehensively controls overall processing performed by the node device 200. For example, the control unit 210 can control an output unit (not illustrated) such as a display or a speaker, or the like by controlling the start and stop of the configurations and generating a control signal. Note that the control content of the control unit 210 is not limited thereto. For example, the control unit 210 may control processing generally performed in a general-purpose computer, a PC, a tablet PC, or the like.

### (Registration control unit 211)

The registration control unit 211 has a functional configuration that controls registration of data to the P2P database 221. For example, in a case where the request information requesting registration of the data and the access right information associated with each other to the P2P database 221 is provided from the user device 100, the registration control unit 211 registers these pieces of information to the P2P database 221. At this time, the registration control unit 211 does not register all the requested data, and appropriately confirms the data and the access right information and may reject registration of data or access right information having content prohibited in advance. Note that the registration control unit 211 performs the processing by executing the P2P database program 222.

### (Template setting unit 212)

The template setting unit 212 has a functional configuration that sets a template that is a program to be used when interpreting access right information. As described above, the node device 200 implements the access control by interpreting the access right information associated with data using the template included in the P2P database program 222. Then, the template setting unit 212 can newly create, change, or delete the template, for example, on the basis of a request from the user. More specifically, the user who can modify the P2P database program 222 (for example, the business operator who provides the service, or the like) can newly create, change, or delete the template, for example, using the template setting unit 212. As a result, for example, the business operator who provides the service, or the like can uniquely determine how to handle the access right information.

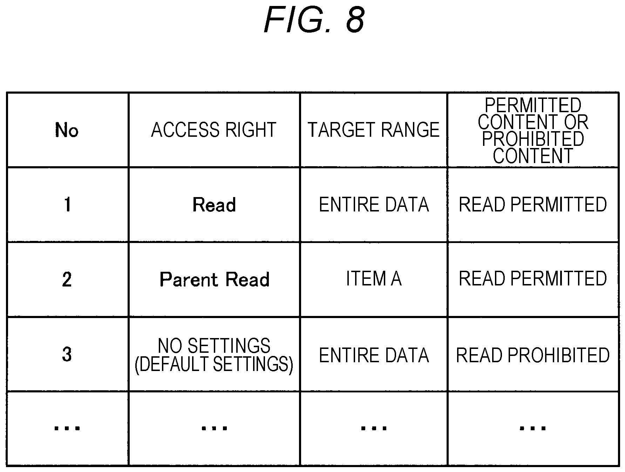

Here, a specific example of the template set by the template setting unit 212 will be described with reference to Fig. 8. For example, as illustrated in Fig. 8, the template includes information such as "access right", "target range", and "permitted content or prohibited content", and the content of access control is defined by these pieces of information.

The "access right" stores the access right included in the access right information described with reference to Figs. 6A to 6C, the "target range" stores information regarding a range in which access control is performed on data, and the "permitted content or prohibited content" stores information regarding processing content permitted or processing content prohibited by each access right.

For example, in the case of No. 1 in Fig. 8, "access right: Read", "target range: entire data", and "permitted content or prohibited content: read permitted" are set. Therefore, a user (or group) who has "Read" set in the access right information can acquire and read the entire data.

Note that, as the "access right" in the template, an access right other than "Read" may be defined as long as the access right can be set by the access right information. For example, as described above, an access right to permit approval processing for the data registered in the P2P database 221, an access right to permit registration of arbitrary information regarding the data registered in the P2P database 221 (for example, information uniquely specifying cached data in a case where the data is cached, or the like) to the P2P database 221, an access right to permit data overwriting, an access right to permit additional data writing, or the like may be defined in the template.

Furthermore, any information may be stored in the "target range" in the template as long as the information can specify all or part of the data. For example, as illustrated in Fig. 8, "item A (in other words, data corresponding to the item A that is one of a plurality of items in the data)" or the like may be stored.

Furthermore, in the "permitted content or prohibited content" in the template, the processing content permitted or the processing content prohibited by each access right stored in the "access right" is specifically defined. The defined content is not limited to the "read permitted" the "read prohibited", and the like illustrated in Fig. 8. For example, a condition for permission or prohibition, or the like (for example, processed date and time, processing purpose, processing method, or the like) can be defined.

Furthermore, the template setting unit 212 may define a new access right. For example, the template setting unit 212 may define a service-specific access right such as "Parent Read (assuming an access right for student guardian)" in Fig. 8. As a result, for example, the business operator who provides each service defines an access right according to various uses, purposes, and the like, whereby the access control suitable for each service can be implemented.

Moreover, the template setting unit 212 can define default settings for access control in order to handle the case where incomplete access right information (or access right information containing an error) is set. More specifically, the template setting unit 212 can define content of access control in the case where either the "target user" or the "access right" in the access right information is not set (or in the case where an error is contained in either the "target user" or the "access right"). For example, the template setting unit 212 may define the content of access control in a case where the "access right" in the access right information is not set, as illustrated in "no settings (default settings)" in Fig. 8. In the case where the "access right" in the access right information is not set in the example in Fig. 8, the user (or group) who is set to the "target user" of the access right information is prohibited to acquire and read the entire data. Although not illustrated in Fig. 8, similarly, in a case where the "target user" of the access right information is not set, the content of access control in the case where an error is contained in either the "target user" or the "access right" may be defined in the template.

Note that the content of the template is not limited to the above example as long as the program can interpret the access right information and implement access control.

### (Access control unit 213)

The access control unit 213 has a functional configuration that controls an access to data registered in the P2P database 221. More specifically, in a case where the request information requesting acquisition of data and the identification information capable of identifying the user are provided from the user device 100, the access control unit 213 executes the P2P database program 222 to acquire the access right information associated with the data, and performs access control on the basis of the information. For example, the access control unit 213 executes the P2P database program 222 to recognize the "target user" and the "access right" included in the access right information and recognize the definition (the target range, and permitted content or prohibited content) of the access right using the template, and performs an output according to the definition. For example, in a case where the "target user: U1" and "access right: Read" are set as the access right information, and the "access right: Read", "target range: entire data", and "permitted content or prohibited content: read permitted" are set in the template, the access control unit 213 provides the entire data to only the user U1. Note that, for example, in a case where part of data is specified in the "target range" in the template, the access control unit 213 performs, for the specified part of data, processing (for example, acquiring the part of data and providing the user, or the like) corresponding to the content specified in the "permitted content or prohibited content" in the template.

### (Storage unit 220)

The storage unit 220 has a functional configuration that stores various types of information. For example, the storage unit 220 stores a program, a parameter, or the like used by each functional configuration of the node device 200 Note that information stored in the storage unit 220 is not limited thereto.

### (P2P database 221)

The P2P database 221 is a database commonly held by the node devices 200, and stores, for example, blockchain data. As described above, the students' learning achievement records (e.g., records related to exam results, credits, qualifications, or the like) and the student activity records (e.g., records related to club activities, student council activities, attendance, or the like), or access right information associated with the aforementioned data, and the like are registered in the P2P database 221. The various types of information registered in the P2P database 221 may be given an electronic signature using an encryption key. Note that the information registered in the P2P database 221 is not limited thereto.

### (P2P database program 222)

The P2P database program 222 is a predetermined program (for example, a chain code or the like) provided in the P2P database 221 and executed on the P2P database 221. By using the P2P database program 222, various types of processing other than transactions of the virtual currency such as Bitcoin are implemented while maintaining consistency according to a predetermined rule, for example.

The P2P database program 222 can implement overall processing performed for the P2P database 221. For example, the P2P database program 222 can implement the registration processing for the data and the access right information associated with each other, the data acquisition processing, and the like, which are performed by accessing the P2P database 221. Furthermore, as described above, the P2P database program 222 is provided with the template, and the access right information is interpreted with the template.

Note that the processing implemented by the P2P database program 222 is not limited thereto. Further, the development language of the P2P database program 222, the number of P2P database programs 222 provided on the P2P database 221, and the like are not particularly limited.

### (Communication unit 230)

The communication unit 230 has a functional configuration that controls various communications with the user device 100 and other node devices 200. Furthermore, the communication unit 230 also functions as an acquisition unit that acquires data associated with access right information desired by the user. For example, the communication unit 230 receives the request information requesting registration of data and access right information associated with each other to the P2P database 221, the request information requesting acquisition of data from the P2P database 221, and the like, and transmits the data acquired from the P2P database 221, or the like, in the communication with the user device 100. Furthermore, the communication unit 230 transmits/receives information or the like used for consensus building (also referred to as "consensus") for updating the P2P database 221 in communication with other node devices 200. Note that the communication content of the communication unit 230 is not limited thereto.

The functional configuration example of the node device 200 has been described above. Note that the functional configuration described above with reference to Fig. 7 is merely an example, and the functional configuration of the node device 200 is not limited to such an example. For example, the node device 200 does not necessarily have all of the configurations illustrated in Fig. 7. Furthermore, the functional configuration of the node device 200 can be flexibly modified according to specifications and operations.

### (2.5. Flow of processing)

The functional configuration example of the node device 200 has been described above. Next, a flow of processing by each device according to the present embodiment will be described.

### (Flow of data and access right information registration processing)

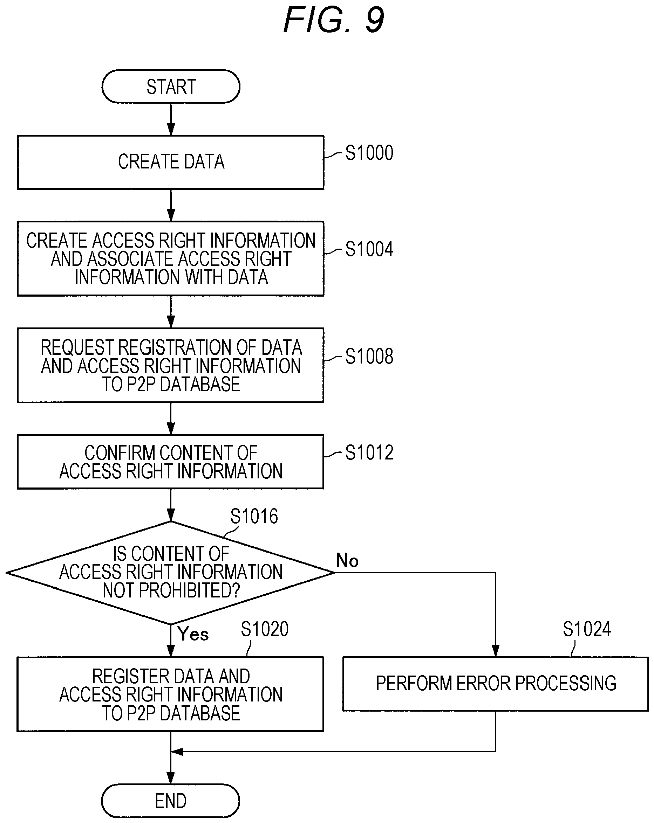

First, an example of a flow of the processing of registering data and access right information to the P2P database 221 will be described with reference to Fig. 9.

In step S1000, the data creation unit 111 of the user device 100 creates data to be registered to the P2P database 221 on the basis of the request from the user. In step S1004, the access right setting unit 112 creates the access right information on the basis of the request from the user, and associates the access right information with the data created by the data creation unit 111. In step S1008, the registration control unit 113 creates the request information requesting registration of the data and the access right information associated with each other by the access right setting unit 112 to the P2P database 221, and provides the node device 200 with the information.

In step S1012, the registration control unit 211 of the node device 200 confirms whether or not the content of the access right information is prohibited. In a case where the content of the access right information is not prohibited (step S1016/Yes), the series of processing is terminated by the registration control unit 211 registering the data and the access right information associated with each other to the P2P database 221 in step S1020. On the other hand, in a case where the content of the access right information is prohibited (step S1016/No), the series of processing is terminated by performing predetermined error processing in step S1024. For example, the registration control unit 211 provides the user device 100 with an error signal to notify the user that the registration processing for the data and the access right information to the P2P database 221 has failed. Note that the content of the predetermined error processing is not limited thereto.

### (Flow of processing regarding access control)

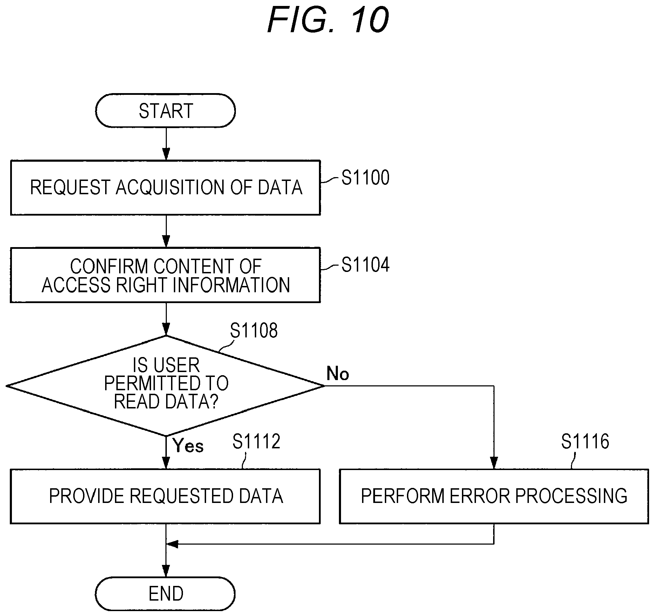

Next, an example of a flow of the processing of acquiring data from the P2P database 221, that is, the processing regarding access control to data registered in the P2P database 221 will be described with reference to Fig. 10.

In step S1100, the acquisition control unit 114 of the user device 100 creates the request information (for example, a query or the like) specifying data registered in the P2P database 221 on the basis of the request from the user, and provides the node device 200 with the information. At that time, the acquisition control unit 114 also provides the node device 200 with the identification information that can identify the authenticated user.

In step S1104, the access control unit 213 of the node device 200 executes the P2P database program 222 to confirm the content of the access right information associated with the requested data. In a case where the access control unit 213 determines that the user is permitted to read the data by interpreting the access right information using the template (step S1108/Yes), the access control unit 213 acquires the requested data from the P2P database 221 and provides the user device 100 with the data in step S1112, and the series of processing is terminated. In a case where it is determined that the user is not permitted to read data (step S1108/No), the series of processing is terminated by performing predetermined error processing in step S1116. For example, the access control unit 213 provides the user device 100 with an error signal to notify the user that the access right for permitting data read is not set. Note that the content of the predetermined error processing is not limited thereto.

Furthermore, the steps in the flowcharts in Figs. 9 and 10 do not necessarily need to be processed chronologically in the described order. That is, the steps in the flowcharts may be processed in an order different from the described order or may be processed in parallel.

### (2.6. Access right information collective setting function)

The flow of processing by each device according to the present embodiment has been described above. Next, the access right information collective setting function will be described.

The above description has been made such that the data creation unit 111 of the user device 100 creates the data and the access right setting unit 112 creates the access right information, and then the access right information is associated with the data. Here, the information processing system according to the present embodiment may automatically associate the access right information with the data by fetching a file in a predetermined format in which a plurality of data is stored.

For example, a file in a CSV format (hereinafter referred to as "CSV file") in which a plurality of students and test score data of the students are stored, and a setting file used for the processing of creating access right information and the processing of associating the access right information with data are prepared. Here, the setting file is, for example, a file in which logic for setting the "target user" and the "access right" of the access right information described with reference to Figs. 6A to 6C is defined. More specifically, it is assumed that information regarding a reference source of the user set to the "target user" (for example, a predetermined data position in the CSV file, or the like) and information regarding a reference source of the access right set to the "access right" (for example, a predetermined data position in the CSV file, or the like) are defined in the setting file.

Then, in a case where the CSV file and the setting file are input from the input unit 120 of the user device 100, for example, the access right setting unit 112 analyzes the files and then automatically performs separation of a plurality of data stored in the CSV file, creation of the access right information, and association of the separated data and the access right information. Since processing after the data and the access right information are associated is similar to the above-described processing, the description thereof is omitted. Such an access right information collective setting function reduces the user workload required from data creation to data and access right information association. Note that the used file format is not limited to the CSV format. Furthermore, the P2P database program 222 of the node device 200 may implement the above processing, instead of the access right setting unit 112 of the user device 100.

### <3. Hardware configuration example>

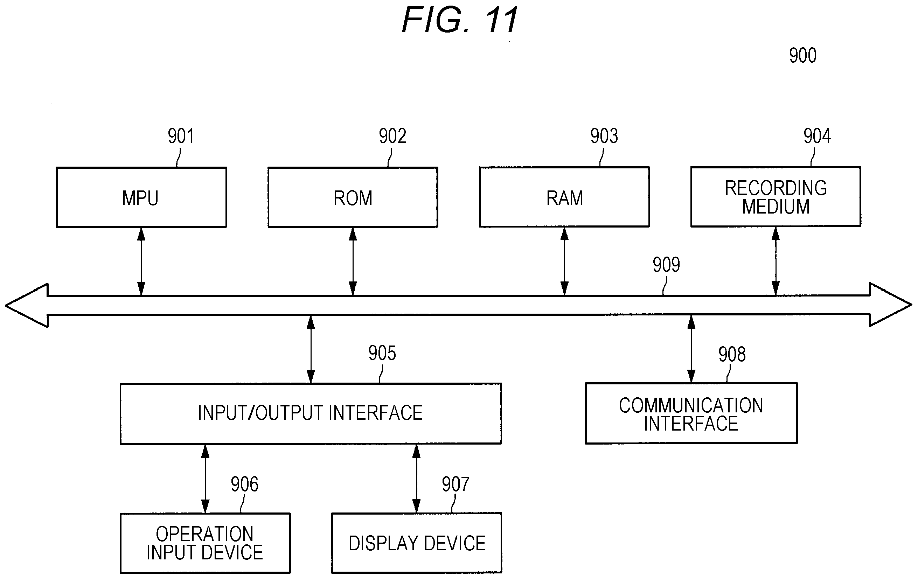

The embodiments of the present disclosure have been described above. Next, a hardware configuration of devices according to the present embodiment will be described with reference to Fig. 11.

Fig. 11 is a block diagram illustrating an example of a hardware configuration of the user device 100 or the node device 200 according to the present disclosure. The user device 100 or the node device 200 according to the present embodiment can be implemented by an information processing device 900 illustrated in Fig. 11.

The information processing device 900 includes, for example, an MPU 901, a ROM 902, a RAM 903, a recording medium 904, an input/output interface 905, an operation input device 906, a display device 907, and a communication interface 908. Furthermore, the information processing device 900 has a bus 909 as a data transmission path connecting configuration elements, for example.

The MPU 901 includes, for example, one or two or more processors configured with an arithmetic circuit such as an MPU, various processing circuits, and the like, and functions as the control unit 110 of the user device 100 or the control unit 210 of the node device 200. Note that the control unit 110 of the user device 100 or the control unit 210 of the node device 200 may be configured by a dedicated (or general-purpose) circuit (for example, a separate processor from the MPU 901, or the like), which can implement the above-described various types of processing.

The ROM 902 stores a program and control data such as calculation parameters to be used by the MPU 901, and the like. The RAM 903 temporarily stores, for example, the program to be executed by the MPU 901, or the like.

The recording medium 904 functions as the storage unit 140 of the user device 100 or the storage unit 220 of the node device 200, and stores, for example, data and access right information registered in the P2P database 221, various data and programs regarding information processing according to the present embodiment such as the P2P database program 222 or the template, and the like. Here, examples of the recording medium 904 include a magnetic recording medium such as a hard disk, and a nonvolatile memory such as a flash memory. Furthermore, the recording medium 904 may be attachable to and detachable from the information processing device 900.

The input/output interface 905 connects, for example, the operation input device 906 and the display device 907. Here, examples of the input/output interface 905 include a universal serial bus (USB) terminal, a digital visual interface (DVI) terminal, a high-definition multimedia interface (HDMI) (registered trademark) terminal, various processing circuits, and the like.

Furthermore, the operation input device 906 is provided on the information processing device 900, for example, and is connected with the input/output interface 905 inside the information processing device 900. Examples of the operation input device 906 include a keyboard, a mouse, a keypad, a touch panel, a microphone, an operation button, a rotary selector such as a direction key and a jog dial, a combination thereof, and the like. The operation input device 906 functions as the input unit 120 of the user device 100.

Furthermore, the display device 907 is provided on the information processing device 900, for example, and is connected with the input/output interface 905 inside the information processing device 900. Examples of the display device 907 include a liquid crystal display, an organic electroluminescence (EL) display, and the like. The display device 907 functions as the output unit 130 of the user device 100.

Note that it goes without saying that the input/output interface 905 can be connected to an external device such as an operation input device outside the information processing device 900 or an external display device. Furthermore, the display device 907 may be a device capable of display and user operation such as a touch panel, for example.

The communication interface 908 is a communication means included in the information processing device 900, and functions as the communication unit 150 of the user device 100 or the communication unit 230 of the node device 200. Furthermore, the communication interface 908 may have a function to perform wireless or wired communication with an arbitrary external device such as a server, for example, via an arbitrary network (or directly). Here, examples of the communication interface 908 include a communication antenna and radio frequency (RF) circuit (wireless communication), IEEE802.15.1 port and transmission/reception circuit (wireless communication), IEEE802.11 port and transmission/reception circuit (wireless communication), and a local area network (LAN) terminal, a transmission/reception circuit (wired communication), and the like.

Note that the hardware configuration of the information processing device 900 according to the present embodiment is not limited to the configuration illustrated in Fig. 11. For example, in a case of performing communication via a connected external communication device, the information processing device 900 may not include the communication interface 908. Furthermore, the communication interface 908 may be able to perform communication by a plurality communication methods. Furthermore, the information processing device 900 may not include the operation input device 906, the display device 907, or the like, for example. Furthermore, for example, a part or all of the configurations illustrated in Fig. 11 may be implemented by one or two or more integrated circuits (ICs).

### <4. Conclusion>

As described above, the information processing system according to the present disclosure can register arbitrary data associated with access right information desired by the user to the P2P database 221. Then, the information processing system according to the present disclosure is provided with the template in the P2P database program 222, and can implement the access control by interpreting the access right information associated with the data using the template. Thereby, not an administrator of the P2P database 221 but the user himself/herself who has created the data can implement the access control to the data registered in the P2P database 221.

Furthermore, the information processing system according to the present disclosure can set the access right information for an anonymous person who is a user not authenticated on the system. As a result, even in a case where the anonymous person requests acquisition of data registered in the P2P database 221, the information processing system according to the present disclosure can appropriately respond on the basis of the access right information associated with the data.

Furthermore, the information processing system according to the present disclosure can prevent falsification of the access right information and the like and ensure the authenticity of the access right information by registering the access right information associated with data to the P2P database 221.

Furthermore, according to the information processing system according to the present disclosure can set (for example, newly create, change, delete, or the like) the template used when interpreting the access right information. Thereby, for example, the business operator who provides a service to a user or the like can determine how to handle the access right information by setting the template.

Although the favorable embodiment of the present disclosure has been described in detail with reference to the accompanying drawings, the technical scope of the present disclosure is not limited to such examples. It is obvious that persons having ordinary knowledge in the technical field of the present disclosure can conceive various modifications or alterations within the scope of the technical idea described in the claims, and the modifications and alterations are naturally understood to belong to the technical scope of the present disclosure.

Furthermore, the effects described in the present specification are merely illustrative or exemplary and are not restrictive. That is, the technology according to the present disclosure can exhibit other effects obvious to those skilled in the art from the description of the present specification together with or in place of the above-described effects.

Note that the following configurations also belong to the technical scope of the present disclosure.
(1) An information processing device including:
   an acquisition unit configured to acquire arbitrary data associated with access right information desired by a user; and
   a registration control unit configured to control registration of the arbitrary data to a P2P database.
(2) The information processing device according to (1), further including:
   an access control unit configured to perform access control to the arbitrary data registered in the P2P database on the basis of the access right information.
(3) The information processing device according to (2), in which
   the access control unit performs the access control using a predetermined program provided in the P2P database and executed on the P2P database.
(4) The information processing device according to (3), in which
   the predetermined program is provided with a template that defines content of the access control based on the access right information.
(5) The information processing device according to (4), in which
   the template defines a range to be an object for the access control in the arbitrary data, and content of processing permitted by the access control or content of processing prohibited by the access control.
(6) The information processing device according to (4) or (5), in which
   the template defines content of the access control of a case where the access right information is incomplete or a case where the access right information contains an error.
(7) The information processing device according to any one of (4) to (6), further including:
   a template setting unit configured to newly create, change, or delete the template on the basis of a request from the user.
(8) The information processing device according to any one of (1) to (7), in which
   the access right information includes information regarding an access right to be set and information regarding a user to which the access right is to be set.
(9) The information processing device according to (8), in which
   the user to which the access right is to be set includes an anonymous person who is an unauthenticated user.
(10) The information processing device according to (8) or (9), in which
   the access right includes an authority regarding reading of the arbitrary data, approving of the arbitrary data, writing of information uniquely specifying the arbitrary data cached in an arbitrary device, overwriting of the arbitrary data, or additional writing to the arbitrary data.
(11) The information processing device according to any one of (8) to (10), further including:
   an access right setting unit configured to acquire a file including a plurality of the arbitrary data, and collectively and automatically associate the arbitrary data with the access right information.
(12) The information processing device according to any one of (1) to (11), in which
   the P2P database stores blockchain data.
(13) An information processing method executed by a computer, the method including:
   acquiring arbitrary data associated with access right information desired by a user; and
   controlling registration of the arbitrary data to a P2P database.
(14) A program for causing a computer to implement:
   acquiring arbitrary data associated with access right information desired by a user; and
   controlling registration of the arbitrary data to a P2P database.

### REFERENCE SIGNS LIST

- 100: User device
- 110: Control unit
- 111: Data creation unit
- 112: Access right setting unit
- 113: Registration control unit
- 114: Acquisition control unit
- 120: Input unit
- 130: Output unit
- 140: Storage unit
- 150: Communication unit
- 200: Node device
- 210: Control unit
- 211: Registration control unit
- 212: Template setting unit
- 213: Access control unit
- 220: Storage unit
- 221: P2P database
- 222: P2P database program
- 230: Communication unit
- 300: Network
- 400: P2P network

## Claims

1. An information processing device comprising:
an acquisition unit configured to acquire arbitrary data associated with access right information desired by a user; and
a registration control unit configured to control registration of the arbitrary data to a P2P database.

2. The information processing device according to claim 1, further comprising:
an access control unit configured to perform access control to the arbitrary data registered in the P2P database on a basis of the access right information.

3. The information processing device according to claim 2, wherein
the access control unit performs the access control using a predetermined program provided in the P2P database and executed on the P2P database.

4. The information processing device according to claim 3, wherein
the predetermined program is provided with a template that defines content of the access control based on the access right information.

5. The information processing device according to claim 4, wherein
the template defines a range to be an object for the access control in the arbitrary data, and content of processing permitted by the access control or content of processing prohibited by the access control.

6. The information processing device according to claim 4, wherein
the template defines content of the access control of a case where the access right information is incomplete or a case where the access right information contains an error.

7. The information processing device according to claim 4, further comprising:
a template setting unit configured to newly create, change, or delete the template on a basis of a request from the user.

8. The information processing device according to claim 1, wherein
the access right information includes information regarding an access right to be set and information regarding a user to which the access right is to be set.

9. The information processing device according to claim 8, wherein
the user to which the access right is to be set includes an anonymous person who is an unauthenticated user.

10. The information processing device according to claim 8, wherein
the access right includes an authority regarding reading of the arbitrary data, approving of the arbitrary data, writing of information uniquely specifying the arbitrary data cached in an arbitrary device, overwriting of the arbitrary data, or additional writing to the arbitrary data.

11. The information processing device according to claim 8, further comprising:
an access right setting unit configured to acquire a file including a plurality of the arbitrary data, and collectively and automatically associate the arbitrary data with the access right information.

12. The information processing device according to claim 1, wherein the P2P database stores blockchain data.

13. An information processing method executed by a computer, the method comprising:
acquiring arbitrary data associated with access right information desired by a user; and
controlling registration of the arbitrary data to a P2P database.

14. A program for causing a computer to implement:
acquiring arbitrary data associated with access right information desired by a user; and
controlling registration of the arbitrary data to a P2P database.
